# EUROPÄISCHE PATENTSCHRIFT

(11) **EP 1 419 566 B1**
(45) Veröffentlichungstag und Bekanntmachung des Hinweises auf die Patenterteilung: **03.08.2005**
(21) Anmeldenummer: 02727605.4
(22) Anmeldetag: 23.05.2002
(51) Int. Cl.: H02K 5/22, H02K 11/04, H02K 5/14

(54) **MECHANISCHE SCHNITTSTELLENVORRICHTUNG**
MECHANICAL INTERFACE SYSTEM
SYSTEME D'INTERFACE MECANIQUE

(30) Priorität: 23.08.2001 DE 10141244
(43) Veröffentlichungstag der Anmeldung: 19.05.2004
(73) Patentinhaber: Brose Fahrzeugteile GmbH & Co. KG, Coburg, 96450 Coburg (DE)
(72) Erfinder: BECKER, Herbert, 96450 Coburg (DE); KLIPPERT, Uwe, 96472 Rödental (DE); DUMBSER, Gerhard, 97464 Niederwerm (DE); SEEBERGER, Jürgen, 96148 Baunach (DE); ROSENTHAL, Karl-Heinz, 96148 Baunach (DE)
(74) Vertreter: Reinhard - Skuhra - Weise & Partner GbR
(86) Internationale Anmeldenummer: PCT/EP2002/005675
(87) Internationale Veröffentlichungsnummer: WO 2003/019751

(56) Entgegenhaltungen:
- WO-A-01/59915
- DE-A- 19 916 958
- DE-C- 19 839 333
- US-A- 5 528 093
- US-B1- 6 191 512
- PATENT ABSTRACTS OF JAPAN vol. 1998, no. 13, 30. November 1998 (1998-11-30) & JP 10 225048 A (MABUCHI MOTOR CO LTD), 21. August 1998 (1998-08-21)

## Beschreibung

Die Erfindung betrifft eine mechanische Schnittstellenvorrichtung für eine motorische Antriebseinheit in Kraftfahrzeugen, insbesondere in einer Kraftfahrzeugtür.

In der DE 198 514 55 A1 ist ein Modul zur Anbringung an einer elektromotorisch betriebenen Antriebseinheit beschrieben, welche mit einem Verbindungssockel versehen ist, mit dessen Hilfe das Modul an der Antriebseinheit befestigt wird. Derartige Antriebseinheiten werden im allgemeinen z.B. in Fahrzeugtüren angeordnet und unterliegen beim Zuschlagen der Tür einer hohen Beschleunigungskraft von beispielsweise 50 g. Dies birgt die Gefahr in sich, dass beim Zuschlagen von Fahrzeugtüren derartige Module gegenüber der Antriebseinheit gelöst bzw. elektrische und elektronische Kontakte oder Sensoren aus ihrer Betriebsposition gebracht werden und somit die Antriebseinheit funktionsunfähig wird.

Als Antriebseinheiten von Fahrzeuginnentüren sind beispielsweise motorische Antriebe für Fensterheber, Außenspiegel, Sitzverstellung, Türschloss oder dergleichen zu verstehen.

Aus der DE 90 130 06 U1 ist ein System bekannt, bei dem die Antriebseinheit und die Steuereinheit als gemeinsame Einheit ausgebildet sind. Eine derartige Antriebseinheit hat den Nachteil, dass sie nur für gleiche Module bzw. Steuereinheiten verwendbar ist und sich eine nach dem Baukastensystem ausgelegte Gestaltung der Steuereinheiten nicht realisieren lässt, da ein Austauschen oder ein Verwenden unterschiedlicher Steuereinheiten nicht möglich ist.

Die DE-C1-198 39 333 und JP-A-10225048 beschreiben auch eine mechanische Schnittstellenvorrichtung entsprechend dem Stand der Technik.

Der Erfindung liegt demnach die Aufgabe zugrunde, eine mechanische Schnittstellenvorrichtung für Antriebseinheiten, insbesondere in Kraftfahrzeugtüren, zu schaffen, die nach dem Baukastenprinzip zur Aufnahme unterschiedlicher Anschlusseinheiten, beispielsweise einer Steuer- oder Steckereinheit oder dergleichen dient.

Diese Aufgabe wird erfindungsgemäß durch die im Patentanspruch 1 angegebenen Merkmale gelöst.

In den Unteransprüchen finden sich vorteilhafte Weiterbildungen und Verbesserungen der in Anspruch 1 angegebenen Schnittstellenvorrichtung.

Eine mechanische Schnittstellenvorrichtung dieser Art ist Gegenstand der parallelen Patentanmeldung....der gleichen Anmelderin und mit gleichem Anmeldetag.

Gemäß einer bevorzugten Weiterbildung ist mindestens eine Führungseinrichtung durch einen Teil des Gehäuses der Antriebseinheit gebildet.

Vorzugsweise ist mindestens eine Führungseinrichtung durch den Bürstenhalter eines in der Antriebseinheit vorgesehenen Kommutatormotors gebildet. Derartige antriebsfeste Kontaktführungseinrichtungen gewährleisten eine stabile Positionierung entsprechender Bauteile.

Gemäß einer weiteren bevorzugten Weiterbildung ist die Führungseinrichtung starr ausgebildet.

In einer weiteren Ausführung ist mindestens eine Kontaktführungseinrichtung durch Führungselemente gebildet, die innerhalb der Antriebseinheit vorgesehen sind. Dadurch werden die durch eine Aussparung eingeführten Steckkontakte, Halteabschnitte, elektrische Leiter oder dergleichen der Steck- oder Steuereinheit in eine vorbestimmten stabile Betriebsposition geführt und auch beim Auftreten von Querkräften in diesem Zustand gehalten.

Vorzugsweise sind die Führungselemente jeweils paarweise parallel zur Aufnahmerichtung angeordnet, wobei die Paare Führungselemente unterschiedliche Führungshöhen aufweisen. Somit erfolgt eine Unterscheidung der verschiedenen Elektroniken auch durch die mechanischen Schnittstellen.

Gemäß einer weiteren bevorzugten Ausführungsform ist der Bauteilträger flexibel ausgebildet.

Bei einer weiteren Ausführungsform besteht der Halteabschnitt der Stecker- oder Steuereinheit aus einem Finger einer Leiterplatte, eines Stanzgitters, eines Lead-Frames, eines Teils auf MID-Basis oder dergleichen, auf dem Bauteile, wie beispielsweise ein Sensor; eine Elektronik mit integriertem Sensor, insbesondere einem Hall-Sensor; Entstörbauteile, wie beispielsweise eine Drossel oder ein Kondensator; ein 1-Chip-Mikrocontroller mit integriertem Hall-Sensor oder dergleichen angeordnet sind. Durch die Führung des Fingers mittels entsprechend zugeordneter, starrer Führungseinrichtungen werden die entsprechenden Bauteile entsprechend ihrer Funktionalität in einen vorbestimmten stabilen Betriebszustand geführt und in diesem stabil gehalten.

Die Steck- oder Steuereinheit steht im Betriebszustand vorzugsweise mit der Aussparung formschlüssig in Eingriff. Somit sind die einzelnen elektrischen oder elektromechanischen Bauteile im Inneren der Antriebseinheit vor äußeren Einflüssen, beispielsweise Schmutzpartikeln, geschützt.

Bei einer bevorzugten Weiterbildung ist zwischen der Aussparung und dem Gehäuse der Steck- oder Steuereinheit mindestens eine Dichtungseinrichtung, insbesondere ein Dichtungsring oder eine mehrstufige Lamellendichtung, vorgesehen. Somit sind die elektrischen Bauteile auch vor Feuchtigkeit geschützt. Dadurch lässt sich die Gesamtanordnung sowohl in einem Trocken- als auch in einem Nassraum einsetzen, in letzterem Fall zusammen mit der erwähnten Dichtungseinrichtung.

### Zeichnungen

Ausführungsbeispiele der Erfindung sind in den Zeichnungen dargestellt und in der nachfolgenden Beschreibung näher erläutert.

Von den Figuren zeigen:
- Fig. 1: eine perspektivische Ansicht einer Schnittstellenvorrichtung gemäß einem Ausführungsbeispiel der vorliegenden Erfindung mit teilweise eingesetzter Steuereinheit;
- Fig. 2: eine perspektivische Vorderansicht des Innenraumes einer Antriebseinheit mit angebrachter Schnittstellenvorrichtung gemäß einem Ausführungsbeispiel der vorliegenden Erfindung;
- Fig. 3: eine perspektivische Seitenansicht der Antriebseinheit in Pfeilrichtung gemäß Fig. 2 mit eingeführtem Leiterplattenabschnitt;
- Fig. 4: eine perspektivische Vorderansicht des Innenraumes einer Antriebseinheit mit angebrachter Schnittstellenvorrichtung gemäß einem Ausführungsbeispiel der vorliegenden Erfindung;
- Fig. 5: eine perspektivische Seitenansicht der Antriebseinheit in Pfeilrichtung gemäß Fig. 4 mit eingeführtem Leiterplattenabschnitt;
- Fig. 6: eine perspektivische Ansicht der Antriebseinheit ohne integriertem Motor mit angebrachter Schnittstellenvorrichtung und teilweise eingesetzter Steckervorrichtung gemäß einem Ausführungsbeispiel der vorliegenden Erfindung; und
- Fig. 7: eine weitere perspektivische Ansicht der Anordnung in Fig. 6.

### Beschreibung der Ausführungsbeispiele

In den Figuren bezeichnen gleiche Bezugszeichen gleiche oder funktionsgleiche Komponenten.

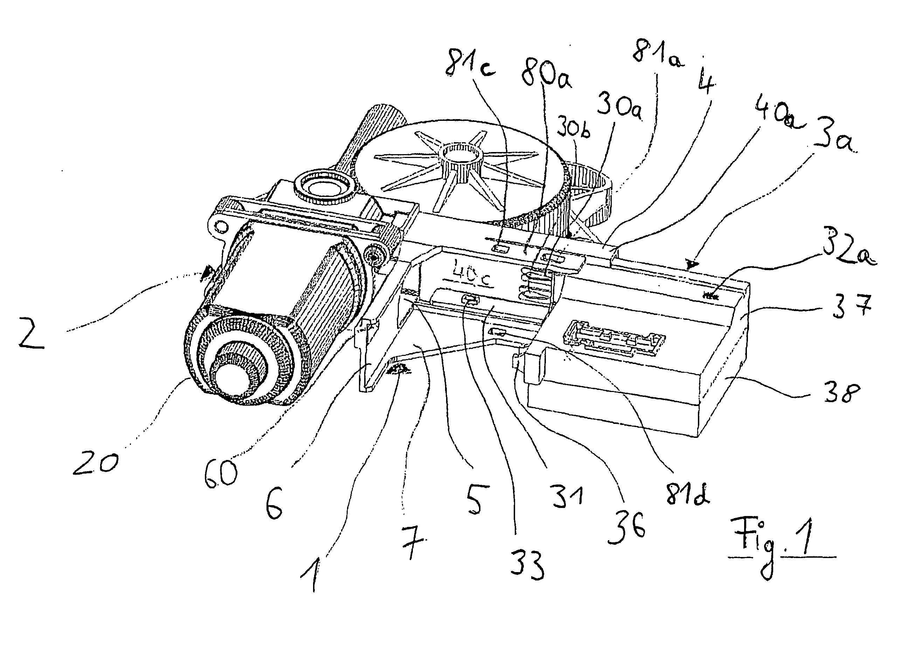

Fig. 1 illustriert eine Perspektivansicht einer motorischen Antriebseinheit 2 mit einem Kommutatormotor 20. Es sei an dieser Stelle vorab bemerkt, dass in den nachfolgenden Figuren der Kommutatormotor 20 aus Gründen der besseren Darstellung des Inneren der Antriebseinheit 2 weggelassen ist.

An der Antriebseinheit 2 ist eine Schnittstellenvorrichtung 1 mit Aufnahme- und Führungseinrichtungen 4, 6 angebracht. Mittels der mechanischen Schnittstellenvorrichtung 1 wird eine Steuereinheit 3a fest mit der Antriebseinheit 2 verbunden und stabil in einem Betriebszustand gelagert.

Die mechanische Schnittstellenvorrichtung 1 weist eine Führungseinrichtung 4 auf, die vorzugsweise aus zwei stabilen Führungsschienen 40a, 40b besteht, welche gegenüberliegend angeordnet und durch eine stabile Verbindungsplatte 40c miteinander verbunden sind.

Die Schnittstellenvorrichtung 1 weist ferner eine Rasteinrichtung auf, die gemäß dem vorliegenden Ausführungsbeispiel zwei Arretierzungen 80a, 80b besitzt. Die Arretierzungen 80a, 80b sind jeweils parallel zu einer Führungsschiene 40a, 40b der Führungseinrichtung 4 angeordnet und besitzen mehrere, beispielsweise jeweils zwei, in Aufnahmerichtung hintereinander angeordnete Rastöffnungen 81a, 81c bzw. 81b, 81d. Zudem sind die Arretierzungen 80a, 80b der Rasteinrichtung z.B. einseitig an der Führungseinrichtung 4 gelagert und einteilig mit dieser ausgebildet. Die freien Enden der Arretierzungen 80a, 80b weisen vorteilhaft weg von der Antriebseinheit 2. Somit bilden die beiden Arretierzungen 80a, 80b einen biegsamen bzw. federelastischen Einsteckbereich.

Die mechanische Schnittstellenvorrichtung 1 weist ferner eine Lagereinrichtung 6 auf, die vorzugsweise senkrecht zur Führungseinrichtung 4 bzw. zu den Arretierzungen 80a, 80b angeordnet und an diesen angeformt ist. Die Lagereinrichtung 6 besteht aus einem plattenförmigen Abschnitt, in welchem die Aussparung 5 zur Durchführung der Leiterplattenzunge 31 und zur Durchführung von elektrischen Kontaktzungen der Steuereinheit 3a vorgesehen ist. Zusätzlich weist der plattenförmige Abschnitt mindestens eine Öffnung 60 auf, in die Vorsprünge 36 der Steuereinheit 3a für eine zusätzliche Stabilisierung und Arretierung eingreifen können.

Zwischen der Führungseinrichtung 4 und der Lagereinrichtung 6 sind seitlich verlaufende, vorzugsweise schenkelförmige Versteifungen angeformt, zwischen denen die Steuereinheit 3a bei Anlage an den plattenförmigen Abschnitt im Betriebszustand zu liegen kommt. Zumindest eine der beiden Versteifungen ist derart ausgebildet, dass sie eine Verstärkungsecke 7 bildet, wobei diese, wie in Fig. 1 dargestellt, in die auf der entsprechenden Seite angeordnete Arretierzunge 80b übergeht. Vorzugsweise ist die zum Kraftfahrzeuginnenraum weisende Seite mit einer Verstärkungsecke 7 ausgebildet, damit die bei einem Zuschlagen der Türen auftretenden Beschleunigungskräfte aufgenommen werden können. Somit dient die Verstärkungsecke 7 einer zusätzlichen Positionssicherung der Steuereinheit 3a.

Aus der Steuereinheit 3a ragt ferner in Richtung auf die Antriebseinheit 2 eine Leiterplattenzunge 31 hervor, auf der beispielsweise ein Hall-Sensor 37, ein 1-Chip-Mikrocontroller oder dergleichen angeordnet ist.

An der auf die Lagereinrichtung weisenden Seite der Steuereinheit 3a sind Steckerkontakte bzw. elektrische Kontaktzungen 30a, 30b oder dergleichen für eine Bestromung des Kommutatormotors 20 angebracht, die von der Steuereinheit 3a parallel zu der Leiterplattenzunge 31 in Richtung auf die Antriebseinheit 2 abstehen. Über die elektrischen Kontaktzungen 30a, 30b erfolgt die elektrische Verbindung zwischen der Steuereinheit 3a und der motorischen Antriebseinheit 2. Die Steckerkontakte 30a, 30b und die Leiterplattenzunge 31 werden durch die durchgehende Aussparung 5 zwischen der Schnittstellenvorrichtung 1 und der Antriebseinheit 2 hindurch in die Antriebseinheit 2 geführt.

Die Steuereinheit 3a besteht vorzugsweise aus zwei Gehäuseschalen 37, 38, wobei an jeder Gehäuseschale 37, 38 vorzugsweise ein seitlich abstehender Rastzahn 32a bzw. 32b vorgesehen ist, der in die entsprechend zugewiesene Rastöffnung 81a bzw. 81b der Rasteinrichtung bzw. Arretierzunge 80a, 80b im Betriebszustand der Steuereinheit 3a eingreift

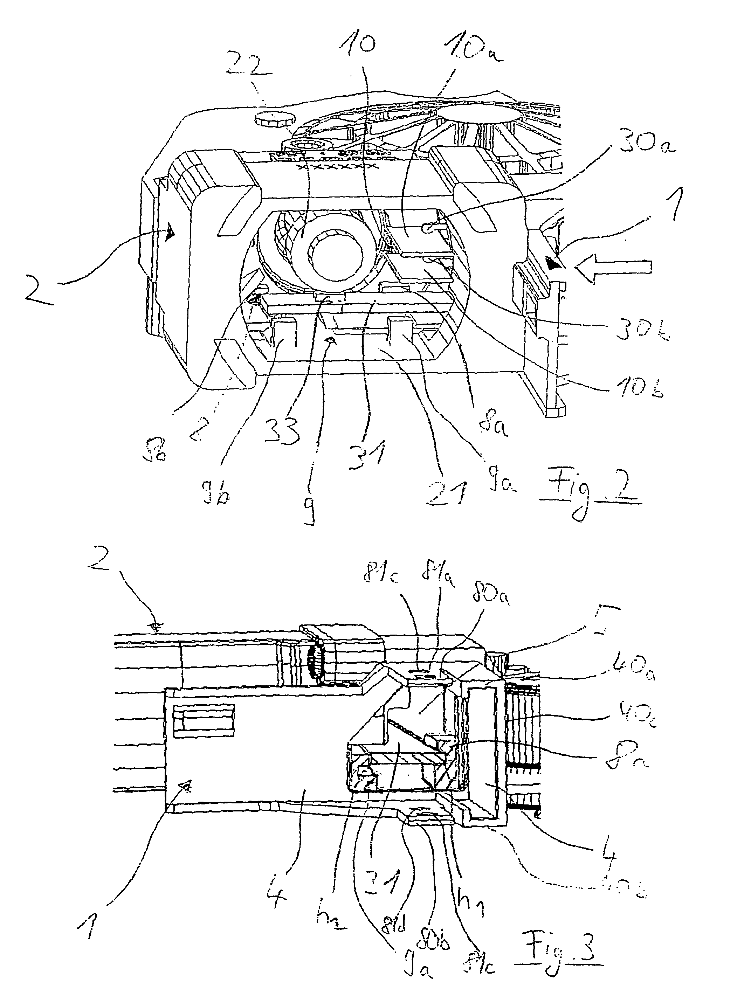

Fig. 2 zeigt eine Perspektivansicht der Antriebseinheit 2 mit angebrachter Schnittstellenvorrichtung 1, wie oben bereits erwähnt jedoch ohne dem dazugehörigen Kommutatormotor.

Wie in Fig. 2 ersichtlich, ist bei der dargestellten Ausführungsform die Leiterplattenzunge 31 der Steuereinheit 3a mit darauf montiertem Hall-Sensor 33 durch die Aussparung 5 in das Innere der Antriebseinheit 2 eingeführt. Dabei wird die Leiterplattenzunge 31 durch vorzugsweise zwei Führungselemente 8a, 8b in einen derartigen Betriebszustand geführt, dass der Hall-Sensor 33 eine vorbestimmte Position bezüglich des Ringmagneten 22 einnimmt.

Die beiden Führungselemente 8a, 8b sind parallel zur Aufnahmerichtung der Leiterplatte hintereinander angeordnet und besitzen dieselbe Führungshöhe h₁. Vorteilhaft sind die Führungselemente 8a, 8b einteilig am Bürstenhalter 21 des in der Antriebseinheit 2 vorgesehenen Kommutatormotors oder als Teil des Gehäuses der Antriebseinheit 2 gebildet. Die Führungselemente 8a, 8b sind vorzugsweise als formschlüssige Zwangsführung ausgebildet, wobei die zu führende Leiterplattenzunge 31 beispielsweise in einer Nut im jeweiligen Führungselement geführt wird. Alternativ kann die Führung auch durch eine Kontaktführung bzw. eine federnde Auflageführung realisiert werden, wobei die Leiterplattenzunge 31 vorzugsweise federnd gegen die entsprechenden Auflageflächen der starr angebrachten Führungselemente 8a, 8b bzw. 9a, 9b vorgespannt ist.

Ferner sind in der Antriebseinheit 2 nahe der Aussparung 5 zwei Motorkontakte 10a, 10bin Form von Kontaktplatten vorgesehen, die einerseits einer Führung der Steckerkontakte 30a, 30b der Steuereinheit 3a und andererseits durch das Anklemmen der Steckerkontakte 30a, 30b einer elektrischen Bestromung der Antriebseinheit 2 dienen.

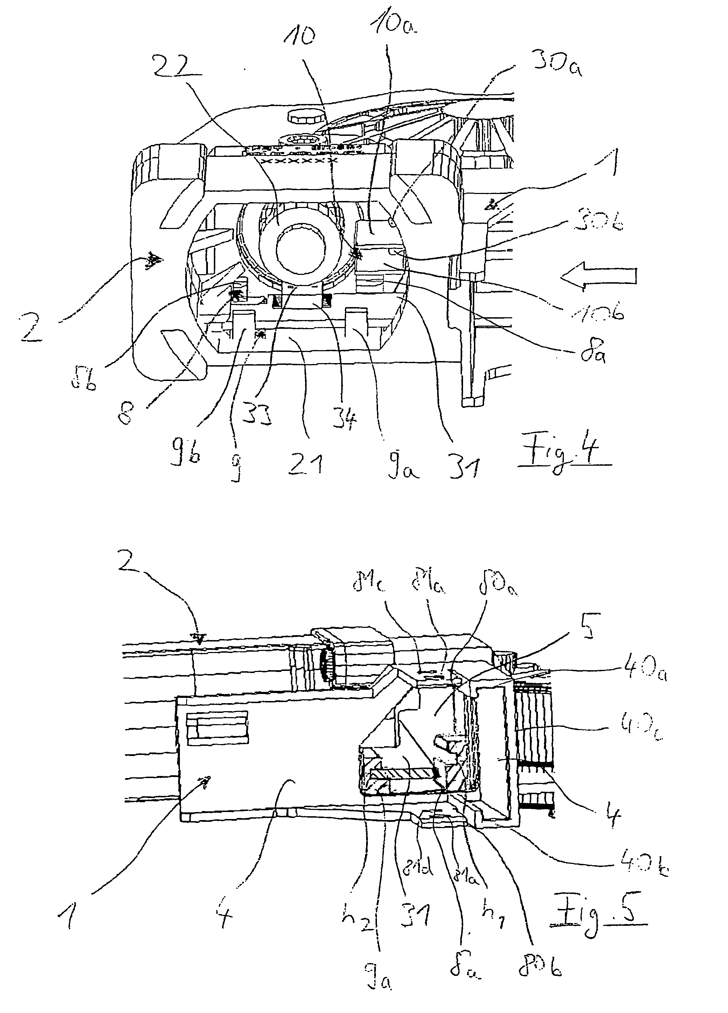

Fig. 3 zeigt eine Ansicht in Pfeilrichtung gemäß Fig. 2. Allerdings ist das Gehäuse der Steuereinheit 3a für eine bessere Darstellung der Führungselemente 8a und 9a nicht und die Leiterplattenzunge 31 lediglich teilweise dargestellt.

Wie aus Fig. 3 i.V.m. Fig. 2 ersichtlich, sind Führungselementepaare 8a, 8b und 9a, 9b mit zwei verschiedenen Führungshöhen h₁ bzw. h₂ dimensioniert. Die beiden Paare von Führungselementen 8a, 8b und 9a, 9b mit verschiedenen Führungshöhen h₁ bzw. h₂ sind einander gegenüberliegend derart in der Antriebseinheit 2 angeordnet, dass sie mit der jeweils eingeführten Leiterplattenzunge 31 korrespondieren. Jeweils ein Paar der Führungselemente 8a, 8b und 9a, 9b ist einer bestimmten Steuereinheit 3a mit einer unterschiedlichen Position der Leiterplattenzunge 31 zugeordnet.

Die einzusteckende Steuereinheit 3a gemäß den Fig. 2 und 3 weist eine Leiterplattenzunge 31 mit darauf montiertem Hall-Sensor 33 auf, wobei die vorbestimmte Betriebsstellung des Hall-Sensors 33 bzgl. des Ringmagneten 22 der Antriebseinheit 2 die Anordnung der Führungselemente 8a, 8b bestimmt. Die Zahl der Führungselemente 8a, 8b bzw. 9a, 9b sowie der Führungseinrichtungen 8, 9 lässt sich im Bedarfsfall entsprechend variieren.

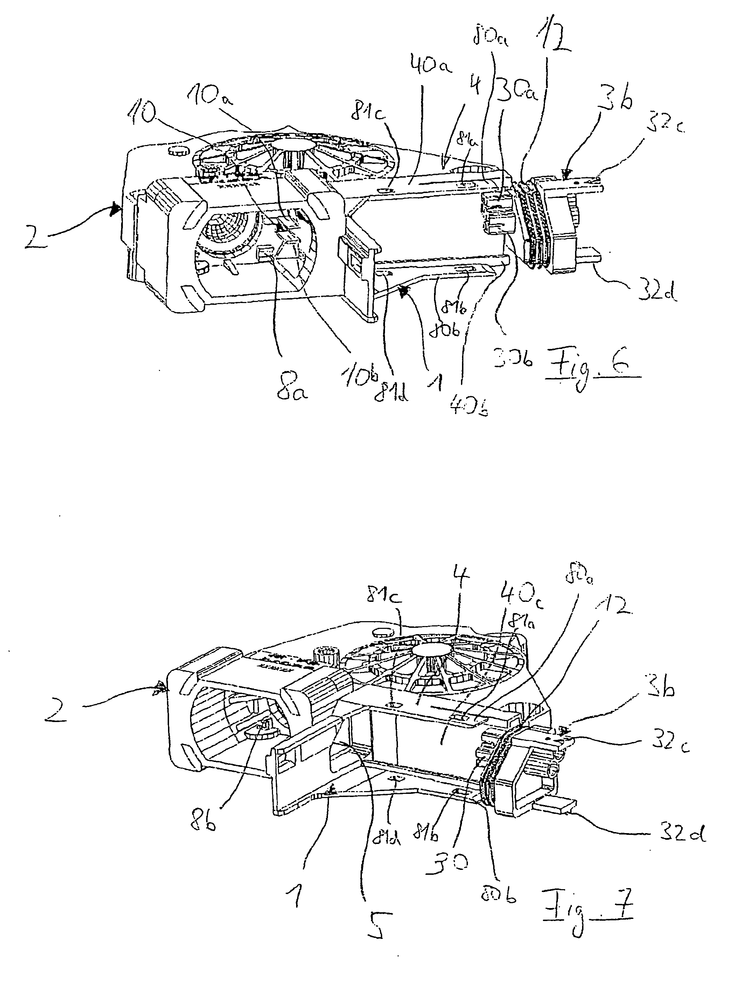

Die Fig. 4 und 5 entsprechen im wesentlichen den Ansichten der Figuren 2 und 3, lediglich mit dem Unterschied, dass die Steuereinheit 3a eine Leiterplattenzunge 31 aufweist, auf der anstatt des Hall-Sensors 33 ein 1-Chip-Mikrocontroller 34 mit integriertem Hall-Sensor 33 montiert ist. Da die Betriebsstellung des Hall-Sensors 33 bzgl. des Ringmagneten 22 vorbestimmt und somit der Stellung in Fig. 2 bzw. Fig. 3 entsprechen muss, jedoch durch den 1-Chip-Mikrocontroller 34 ein zusätzliches Bauteil zwischen dem Leiterplattenfinger 31 und dem Hall-Sensor 33 vorgesehen ist, weisen die dieser Steuereinheit 3a zugeordneten Führungselemente 9a und 9b, wie in Fig. 5 ersichtlich, eine kleinere Führungshöhe h₂ auf. Somit können die Höhenunterschiede der verschiedenen Elektroniken ausgeglichen und diese alleine durch die mechanische Schnittstelle unterschieden werden.

Die übrigen Bauteile und Funktionen entsprechen denen der Anordnung in Fig. 2 bzw. Fig. 3 und bedürfen daher keiner weiteren Erläuterung.

Ausgehend von dem Regelfall einer elektronisch gesteuerten Antriebseinheit 2 für beispielsweise eine Verstelleinrichtung besteht für einen geringen Anteil der Anwendungsfälle die Notwendigkeit der Bereitstellung eines rein elektrischen Antriebes ohne Elektronik.

Wie in den Figuren 6 und 7 perspektivisch dargestellt, wird bei diesem Ausführungsbeispiel der Erfindung über die Schnittstellenvorrichtung 1 eine Steckereinheit 3b derart mit der Antriebseinheit 2 verbunden, dass elektrische Steckerkontakte 30a, 30b der Steckereinheit 3b auf die Kontaktplatten 10a, 10b der Antriebseinheit 2 im Betriebszustand gesteckt und von diesen geführt werden.

Dabei greifen seitlich an der Steckereinheit 3b abstehende Rastzähne 32c und 32d in die entsprechend zugewiesenen Rastöffnungen 81c bzw. 81d der Rasteinrichtung bzw. Arretierzungen 80a und 80b im Betriebszustand der Steckereinheit 3b ein.

Um einen Schutz der elektrischen Kontaktstellen 10 im Inneren der Antriebseinheit 2 beispielsweise vor Schmutzpartikeln oder Feuchtigkeit zu gewährleisten, ist die zur Antriebseinheit 2 weisende Seite der Steckereinheit 3b formschlüssig mit der Aussparung 5 ausgebildet. Zusätzlich ist zwischen der Aussparung 5 und dem Gehäuse der Steckereinheit 3b eine mehrstufige Lamellendichtung 12 für eine Abdichtung der Anordnung im Betriebszustand vorgesehen. Somit kann die Anordnung auch im Nassraum einer Fahrzeugtür ohne durch Feuchtigkeit hervorgerufene Betriebsstörungen eingesetzt werden.

Die vorliegende Erfindung schafft somit eine einfache und kostengünstige Schnittstellenvorrichtung 1 zur Umsetzung des Baukastenprinzips. Es können verschieden ausgebildete Steuer- bzw. Steckereinheiten 3a, 3b an dieselbe Antriebseinheit 2 angeschlossen werden. Somit kann die Steuer- oder Steckereinheit der jeweiligen Anwendung entsprechend mit einer Sensorik; einer Elektronik zur Steuerung eines Fensterhebers, eines Sitzes, eines Schiebedaches, eines Außenspiegels oder dergleichen; mit Entstörbauteilen, wie z.B. einer Drossel oder einem Kondensator; einer Elektronik als Multifunktionselektronik oder dergleichen ausgebildet werden. Durch die entsprechend unterschiedlich ausgebildeten Führungseinrichtungen ist für jegliche Steuer- oder Steckereinheit eine genaue und sichere Positionierung der entsprechenden Bauteile im Betriebszustand gewährleistet.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Insbesondere kann der Halteabschnitt 31 der Steuer- oder Steckereinheit als Finger bzw. Zunge 31 einer Leiterplatte, eines Stanzgitters, eines Lead-Frames, eines Teils auf MID-Basis oder dergleichen ausgebildet sein.

Ferner können die Dichtungseinrichtungen auch zwischen dem zur Antriebseinheit weisenden Abschnitt der Steuereinheit und der Schnittstellenvorrichtung angeordnet sein.

### Bezugszeichenliste

- 1: mechanische Schnittstellenvorrichtung
- 2: motorische Antriebseinheit
- 3a, 3b: Stecker-/Steuereinheit
- 4: Aufnahme-/Führungseinrichtung
- 5: Aussparung
- 6: Lagereinrichtung
- 7: Verstärkungsecke
- 8: Führungseinrichtung
- 8a, 8b: Führungselemente
- 9: Führungseinrichtung
- 9a, 9b: Führungselemente
- 10: Führungseinrichtung
- 10a, 10b: Motorkontakte
- 12: Dichtungseinrichtung
- 20: Kommutatormotor
- 21: Bürstenhalter
- 22: Ringmagnet
- 30a, 30b: Steckerkontakte
- 31: Halteabschnitt/Leiterplattenzunge
- 32a: Rastzahn
- 32b: Rastzahn
- 32c: Rastzahn
- 32d: Rastzahn
- 33: Hall-Sensor
- 34: Elektronik
- 36: Vorsprünge
- 37: erstes Gehäuseteil
- 38: zweites Gehäuseteil
- 40a, b: Führungsschienen
- 40c: Verbindungsplatte
- 80a,b: Arretierzungen
- 81a, b: Rastöffnungen
- 81c, d: Rastöffnungen
- h₁: erste Führungshöhe
- h₂: zweite Führungshöhe

## Patentansprüche

1. Mechanische Schnittstellenvorrichtung (1) für eine motorische Antriebseinheit (2) in Kraftfahrzeugen, insbesondere in einer Kraftfahrzeugtür, die fest mit der Antriebseinheit (2) verbunden ist und Aufnahme- oder Führungseinrichtungen (4, 6) zur Aufnahme einer Anschlusseinheit (3a, 3b) aufweist;
wobei zwischen der Schnittstellenvorrichtung (1) und der Antriebseinheit (2) eine durchgehende Aussparung (5) zur Durchführung von mindestens einem Kontakt, einem Bauteilträger (31) oder dergleichen der Anschlusseinheit (3a; 3b) ausgebildet ist;
wobei mindestens zwei Führungseinrichtungen (8; 9) zum Führen der Kontakte und/oder der Bauteilträger (31) oder dergleichen verschiedener Anschlusseinheiten (3a; 3b) in oder nahe der Antriebseinheit (2) vorgesehen sind; und
wobei die mindestens zwei Führungseinrichtungen (8; 9) jeweils mindestens ein Führungselement (8a, 8b; 9a, 9b) aufweisen, die zum Bilden von unterschiedlichen Führungshöhen (h1; h2) für die Kontakte und/oder die Bauteilträger (31) oder dergleichen der verschiedenen Anschlusseinheiten (3a; 3b) zueinander parallel versetzt sind.

2. Schnittstellenvorrichtung nach Anspruch 1, **dadurch gekennzeichnet, dass** mindestens eine Führungseinrichtung (8; 9) durch einen Teil des Gehäuses der Antriebseinheit (2) gebildet ist.

3. Schnittstellenvorrichtung nach einem der Ansprüche 1 oder 2, **dadurch gekennzeichnet, dass** mindestens eine Führungseinrichtung (8, 9) durch den Bürstenhalter (21) eines in der Antriebseinheit (2) vorgesehenen Kommutatormotors (20) gebildet ist.

4. Schnittstellenvorrichtung nach wenigstens einem der vorangehenden Ansprüche, **dadurch gekennzeichnet, dass** die Führungseinrichtungen (8; 9) starr ausgebildet sind.

5. Schnittstellenvorrichtung nach wenigstens einem der vorangehenden Ansprüche, **dadurch gekennzeichnet, dass** die Führungselemente (8a, 8b; 9a, 9b) jeweils innerhalb der Antriebseinheit (2) vorgesehen sind.

6. Schnittstellenvorrichtung nach Anspruch 5, **dadurch gekennzeichnet, dass** die Führungselemente (8a, 8b; 9a, 9b) jeweils paarweise parallel zur Aufnahmerichtung angeordnet sind.

7. Schnittstellenvorrichtung nach wenigstens einem der vorangehenden Ansprüche, **dadurch gekennzeichnet, dass** der Bauteilträger (31) der Anschlusseinheit (3a, 3b) aus einem Finger (31) einer Leiterplatte, eines Stanzgitters, eines Lead-Frames, eines Teils auf MID-Basis oder dergleichen besteht, auf dem Bauteile, wie beispielsweise ein Sensor (33); eine Elektronik (34) mit integriertem Sensor (33); Entstörbauteile oder dergleichen angeordnet sind.

8. Schnittstellenvorrichtung nach wenigstens einem der vorangehenden Ansprüche, **dadurch gekennzeichnet, dass** der Bauteilträger (31) flexibel ausgebildet ist.

9. Schnittstellenvorrichtung nach einem der Ansprüche 7 oder 8, **dadurch gekennzeichnet, dass** die Bauteile (33, 34) auf dem Bauteilträger (31) der Anschlusseinheit (3a, 3b) durch die entsprechend zugeordnete, starre Führungseinrichtung (8, 9) in eine vorbestimmten stabile Betriebsposition bringbar sind.

10. Schnittstellenvorrichtung nach wenigstens einem der vorangehenden Ansprüche, **dadurch gekennzeichnet, dass** die Anschlusseinheit (3a, 3b) im Betriebszustand formschlüssig mit der Aussparung (5) in Eingriff steht.

11. Schnittstellenvorrichtung nach wenigstens einem der vorangehenden Ansprüche, **dadurch gekennzeichnet, dass** zwischen der Aussparung (5) und dem Gehäuse der Anschlusseinheit (3a, 3b) mindestens eine Dichtungseinrichtung (12), insbesondere ein Dichtungsring oder eine mehrstufige Lamellendichtung, vorgesehen ist.

12. Schnittstellenvorrichtung nach wenigstens einem der vorangehenden Ansprüche, **dadurch gekennzeichnet, dass** mindestens eine Führungseinrichtung wenigstens teilweise durch in der Antriebseinheit vorgesehene Motorkontakte (10a, 10b) gebildet ist.

## Claims

1. Mechanical interface system (1) for a motive drive unit (2) in motor vehicles, especially in a motor vehicle door, which is permanently connected to the drive unit (2) and comprises receiving or guiding means (4, 6) for receiving a connecting unit (3a, 3b),
wherein a continuous recess (5) for leading at least one contact, one component carrier (31) or the like of the connecting unit (3a; 3b) therethrough is formed between the interface system (1) and the drive unit (2);
wherein at least two guiding means (8; 9) for guiding the contacts and/or the component carriers (31) or the like of different connecting units (3a; 3b) are provided in or in the proximity of the drive unit (2); and
wherein the at least two guiding means (8; 9) each comprise at least one guiding member (8a, 8b; 9a, 9b) being offset parallel to each other as to form different guiding heights (h1; h2) for the contacts and/or the component carriers (31) or the like of the different connecting units (3a; 3b).

2. Interface system according to claim 1, **characterized in that** at least one guiding means (8; 9) is formed by a portion of the housing of the drive unit (2).

3. Interface system according to one of claims 1 or 2, **characterized in that** at least one guiding means (8, 9) is formed by the brush holder (21) of a commutator motor (20) provided in the drive unit (2).

4. Interface system according to at least one of the preceding claims, **characterized in that** the guiding means (8; 9) are formed to be rigid.

5. Interface system according to at least one of the preceding claims, **characterized in that** the guiding members (8a, 8b; 9a, 9b) are each provided inside the drive unit (2).

6. Interface system according to claim 5, **characterized in that** the guiding members (8a, 8b; 9a, 9b) are each arranged in pairs parallel to the receiving direction.

7. Interface system according to at least one of the preceding claims, **characterized in that** the component carrier (31) of the connecting unit (3a, 3b) is formed of a finger (31) of a printed circuit board, a pressed screen, a lead frame, a MID-based part or the like, on which components such as a sensor (33), an electronic unit (34) having an integrated sensor (33); anti-interference components or the like are disposed.

8. Interface system according to at least one of the preceding claims, **characterized in that** the component carrier (31) is formed to be flexible.

9. Interface system according to one of claims 7 or 8, **characterized in that** the components (33, 34) on the component carrier (31) of the connecting unit (3a, 3b) can be brought into a predetermined stable operating position by the correspondingly associated rigid guiding means (8, 9).

10. Interface system according to at least one of the preceding claims, **characterized in that** the connecting unit (3a, 3b) engages the recess (5) to have a positive fit in the operating state.

11. Interface system according to at least one of the preceding claims, **characterized in that** at least one sealing means (12), especially a sealing ring or a multi-stage lamella seal, is provided between the recess (5) and the housing of the connecting unit (3a, 3b).

12. Interface system according to at least one of the preceding claims, **characterized in that** at least one guiding means is at least partially formed by motor contacts (10a, 10b) provided in the drive unit.

## Revendications

1. Dispositif d'interface mécanique (1) pour une unité d'entraînement par moteur (2) dans des véhicules automobiles, en particulier dans une portière de véhicule automobile, lequel est relié de manière fixe à l'unité d'entraînement (2) et présente des dispositifs de réception ou de guidage (4, 6) pour la réception d'une unité de raccordement (3a, 3b) ; sachant que, entre le dispositif d'interface (1) et l'unité d'entraînement (2), un évidement de bout en bout (5) est réalisé pour faire passer au moins un contact, un support d'élément constitutif (31) ou similaire, de l'unité de raccordement (3a, 3b); au moins deux dispositifs de guidage (8, 9) pour le guidage des contacts et/ou supports d'éléments constitutifs (31) ou similaires de différentes unités de raccordement (3a, 3b) étant prévus dans, ou à proximité de, l'unité d'entraînement (2) ; et les au moins deux dispositifs de guidage (8, 9) présentant respectivement au moins un élément de guidage (8a, 8b ; 9a, 9b) lesquels, afin de former des hauteurs de guidage différentes (h1; h2) pour les contacts et/ou les supports d'éléments constitutifs (31) ou similaires des différentes unités de raccordement (3a, 3b), sont en décalage parallèle l'un par rapport à l'autre.

2. Dispositif d'interface selon la revendication 1, **caractérisé en ce qu'**au moins un dispositif de guidage (8 ;9) est formé par une partie du boîtier de l'unité d'entraînement (2).

3. Dispositif d'interface selon la revendication 1 ou 2, **caractérisé en ce qu'**au moins un dispositif de guidage (8, 9) est formé par le porte-balais (21) d'un moteur à collecteur (20) prévu dans l'unité d'entraînement (2).

4. Dispositif d'interface selon au moins une des revendications précédentes, **caractérisé en ce que** les dispositifs de guidage (8, 9) sont réalisés de manière à être rigides.

5. Dispositif d'interface selon au moins une des revendications précédentes, **caractérisé en ce que** les éléments de guidage (8a, 8b ; 9a, 9b) sont respectivement prévus à l'intérieur de l'unité d'entraînement (2).

6. Dispositif d'interface selon la revendication 5, **caractérisé en ce que** les éléments de guidage (8a, 8b ; 9a, 9b) sont disposés respectivement par paires, parallèlement à la direction de réception.

7. Dispositif d'interface selon au moins une des revendications précédentes, **caractérisé en ce que** le support d'élément constitutif (31) de l'unité de raccordement (3a, 3b) se compose d'un doigt (31) d'une carte à circuits imprimés, d'un grillage estampé, d'un cadre de montage, d'un élément sur base MID, ou similaire, sur lequel sont disposés des éléments constitutifs tels par exemple qu'un détecteur (33) ; un équipement électronique (34) avec un détecteur (33) intégré ; des éléments d'antiparasitage ou similaires.

8. Dispositif d'interface selon au moins une des revendications précédentes, **caractérisé en ce que** le support d'élément constitutif (31) est réalisé de manière à être flexible.

9. Dispositif d'interface selon l'une quelconque des revendications 7 ou 8, **caractérisé en ce que** les éléments constitutifs (33, 34) sur le support d'élément constitutif (31) de l'unité de raccordement (3a, 3b) peuvent être amenés, par l'intermédiaire du dispositif de guidage (8, 9) rigide associé de manière correspondante, dans une position de fonctionnement stable prédéfinie.

10. Dispositif d'interface selon au moins une des revendications précédentes, **caractérisé en ce que** l'unité de raccordement (3a, 3b) est en prise crabotée avec l'évidement (5), à l'état de fonctionnement.

11. Dispositif d'interface selon au moins une des revendications précédentes, **caractérisé en ce que**, entre l'évidement (5) et le boîtier de l'unité de raccordement (3a, 3b), au moins un dispositif d'étanchéité (12) est prévu, en particulier une bague d'étanchéité ou un calfeutrage à lamelles multiples.

12. Dispositif d'interface selon au moins une des revendications précédentes, **caractérisé en ce qu'**au moins un dispositif de guidage est au moins partiellement formé par des contacts de moteur (10a, 10b) prévus dans l'unité d'entraînement.
